# EUROPEAN PATENT APPLICATION

(11) **EP 3 992 225 A1**
(43) Date of publication of application: **04.05.2022**
(21) Application number: 20830877.5
(22) Date of filing: 26.06.2020
(51) Int. Cl.: C08G 59/30, C08G 77/26, C09D 5/32, G02C 7/00, C09D 183/08, C07F 7/18, G02B 5/22

(54) **CURABLE COMPOSITION, METHOD FOR PRODUCING SAME, EYEGLASS LENS, EYEGLASSES AND METHOD FOR PRODUCING EYEGLASS LENS**

(30) Priority: 28.06.2019 JP 2019120665
(71) Applicant: Hoya Lens Thailand Ltd., Pathumthani 12130 (TH)
(72) Inventor: SEKIGUCHI Yusuke, Tokyo 160-8347 (JP); IGARI Masahito, Tokyo 160-8347 (JP)
(74) Representative: Gerauer, Marc Philippé
(86) International application number: PCT/JP2020/025361
(87) International publication number: WO 2020/262658

(57) **Abstract**

Provided is a curable composition containing an organosilicon compound in which an ultraviolet absorbing moiety and a silane coupling moiety are linked by a urethane bond.

## Description

### Technical Field

The present invention relates to a curable composition, a method for preparing the same, a spectacle lens, spectacles, and a method for producing a spectacle lens.

### Background Art

A spectacle lens usually has a configuration in which one or more functional layers are formed on a lens substrate. For example, Patent Literature 1 discloses a spectacle lens including a hard coating layer containing an ultraviolet absorber and formed on a lens substrate (a lens substrate in Patent Literature 1).

### Citation List

### Patent Literature

Patent Literature 1: JP 9-265059 A

### Summary of Invention

### Technical Problem

When a layer positioned on a lens substrate contains an ultraviolet absorber, ultraviolet absorbability can be imparted to the layer. It is desirable for a spectacle lens to include a layer having ultraviolet absorbability in order to suppress deterioration of the spectacle lens due to exposure to ultraviolet rays outdoors or the like. Furthermore, when weather resistance of the layer containing an ultraviolet absorber can be improved, deterioration of the spectacle lens can be further suppressed, which is more desirable.

An object of one aspect of the present invention is to provide a spectacle lens including a layer having excellent weather resistance.

### Solution to Problem

One aspect of the present invention relates to a curable composition containing an organosilicon compound in which an ultraviolet absorbing moiety and a silane coupling moiety are linked by a urethane bond.

The curable composition can be used, for example, for forming a cured layer on a lens substrate of a spectacle lens. The cured layer thus formed contains an organosilicon compound in which an ultraviolet absorbing moiety and a silane coupling moiety are linked by a urethane bond, and thus, can exhibit excellent weather resistance.

### Advantageous Effects of Invention

According to one aspect of the present invention, it is possible to provide a spectacle lens including a cured layer having excellent weather resistance.

### Description of Embodiments

### [Curable composition and method for preparing the same]

Hereinafter, the curable composition and the method for preparing the same will be described in more detail.

### <Organosilicon compound>

The curable composition contains an organosilicon compound in which an ultraviolet absorbing moiety and a silane coupling moiety are linked by a urethane bond. The organosilicon compound can function as an ultraviolet absorber because it has an ultraviolet absorbing moiety, and can function as a curable component because it has a silane coupling moiety. The curable component refers to a component that can contribute to curing of the curable composition. The organosilicon compound has a structure in which the ultraviolet absorbing moiety is linked to the silane coupling moiety by the urethane bond, such that the organosilicon compound can exhibit more excellent weather resistance than an ultraviolet absorber that does not have such a structure. Furthermore, a cured layer containing the organosilicon compound can exhibit excellent adhesion to a portion adjacent to the layer. In addition, the cured layer containing the organosilicon compound can exhibit excellent ultraviolet absorbability.

Hereinafter, the organosilicon compound will be described in more detail.

### (Ultraviolet absorbing moiety)

In the present invention and the present specification, the ultraviolet absorbability refers to a property exhibiting absorbability to light in a wavelength range of at least 300 nm to 380 nm. Examples of the ultraviolet absorbing moiety exhibiting such a property can include a moiety having a structure of a compound generally known as a compound exhibiting ultraviolet absorbability. Specific examples of the ultraviolet absorbing moiety can include a moiety having one or two or more of a benzotriazole skeleton, a benzophenone skeleton, a triazine skeleton, a benzoate skeleton, a cyanoacrylate skeleton, an indole skeleton, a hindered amine skeleton, an azomethine skeleton, a salicylate skeleton, an anthracene skeleton, an acrylonitrile skeleton, a naphthalimide skeleton, an azine skeleton, and the like. For example, in one aspect, the ultraviolet absorbing moiety included in the organosilicon compound can be a benzotriazole skeleton-containing moiety. The benzotriazole skeleton may be a 2H-benzotriazole skeleton or a 1H-benzotriazole skeleton that is a skeleton of an isomer thereof. In addition, in another aspect, the ultraviolet absorbing moiety included in the organosilicon compound can be a benzophenone skeleton-containing moiety. At least one ultraviolet absorbing moiety may be included in the organosilicon compound per molecule.

### (Silane coupling moiety)

In the present invention and the present specification, the silane coupling moiety refers to a moiety having a silane coupling reactable group. Examples of such a silane coupling moiety can include a moiety having a structure having a compound generally known as a silane coupling agent. In general, the silane coupling agent can be a compound represented by Z-SiR₃, Z can represent a substituent, three R's per molecule can be the same or different groups, and among them, one, two, or three groups can represent an alkoxy group. When a group other than an alkoxy group is included as R, such a group can be a substituent such as an alkyl group. At least one silane coupling moiety may be included in the organosilicon compound per molecule.

### (Bond that links ultraviolet absorbing moiety and silane coupling moiety)

The organosilicon compound has a structure in which an ultraviolet absorbing moiety and a silane coupling moiety are linked by a urethane bond. In one aspect, it is presumed that the urethane bond can contribute to exhibition of excellent adhesion of the cured layer containing the organosilicon compound to a portion adjacent to the cured layer.

### (Specific aspect of organosilicon compound)

The organosilicon compound contained in the curable composition may have any structure as long as an ultraviolet absorbing moiety and a silane coupling moiety are linked by a urethane bond, and can have various structures. Examples of a specific aspect of the organosilicon compound can include a compound represented by the following General Formula (1). 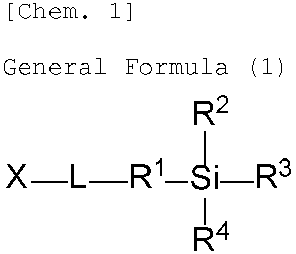 (In General Formula (1), X represents an ultraviolet absorbing moiety, L represents a urethane bond, R¹ represents a divalent linking group, and R², R³, and R⁴ each independently represent an alkoxy group or an alkyl group, where one or more of R², R³, and R⁴ represent an alkoxy group.)

In General Formula (1), X represents an ultraviolet absorbing moiety, and the details thereof are as described above.

In General Formula (1), L represents a urethane bond.

In the compound represented by General Formula (1), the ultraviolet absorbing moiety X is linked to -R¹-SiR²R³R⁴ (silane coupling moiety) by the urethane bond L. R¹ that links the urethane bond L and a silicon atom Si represents a divalent linking group. Examples of the divalent linking group can include a combination of one or two or more of various divalent linking groups such as an alkylene group, an ether bond, a thioether bond, and an ester bond. The number of carbon atoms in the alkylene group can be one or more, two or more, or three or more. In addition, the number of carbon atoms in the alkylene group can be, for example, 10 or less, nine or less, eight or less, seven or less, six or less, five or less, or four or less. The alkylene group can be a linear alkylene group or a branched alkylene group. In addition, the alkylene group can be an unsubstituted alkylene group and can be a substituted alkylene group. In the case of the substituted alkylene group, examples of the substituent included in the substituted alkylene group can include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, a bromine atom, or the like), a cyano group, an amino group, a nitro group, an acyl group, a carboxy group, a salt of a carboxy group, a sulfonic acid group, and a salt of a sulfonic acid group. In addition, in the present invention and the present specification, unless otherwise specified, the group described above may have a substituent and may be unsubstituted. In addition, the "number of carbon atoms" in the group having a substituent refers to the number of carbon atoms not including the number of carbon atoms of the substituent, unless otherwise specified.

In General Formula (1), R², R³, and R⁴ each independently represent an alkoxy group or an alkyl group, where one or more of R², R³, and R⁴ represent an alkoxy group. All R², R³, and R⁴ may be alkoxy groups, and one or two of R², R³, and R⁴ may be an alkoxy group and the others may be an alkyl group. A plurality of alkoxy groups may be the same alkoxy groups or different alkoxy groups. The number of carbon atoms in the alkoxy group can be one or more or two or more. In addition, the number of carbon atoms in the alkoxy group can be, for example, five or less, four or less, or three or less. Specific examples of the alkoxy group can include a methoxy group and an ethoxy group. In addition, in a case where any one of R², R³, and R⁴ is an alkyl group, the number of carbon atoms in such an alkyl group can be one or more, two or more, or three or more. In addition, the number of carbon atoms in such an alkyl group can be, for example, eight or less, seven or less, six or less, five or less, or four or less.

### (Method for synthesizing organosilicon compound)

The organosilicon compound can be synthesized by a urethanization reaction between a compound having an ultraviolet absorbing moiety and a compound having a silane coupling moiety. For example, a urethane bond can be formed by a reaction between a hydroxy group and an isocyanate group by using a hydroxy group-containing compound as one compound of a compound having an ultraviolet absorbing moiety and a compound having a silane coupling moiety and using an isocyanate group-containing compound as the other compound. From the viewpoint of easy availability of the compound, it is preferable that a hydroxy group-containing compound is used as a compound having an ultraviolet absorbing moiety and an isocyanate group-containing compound is used as a compound having a silane coupling moiety. Examples of the organosilicon compound obtained by a urethanization reaction of these compounds can include a compound represented by the following General Formula (1-1).

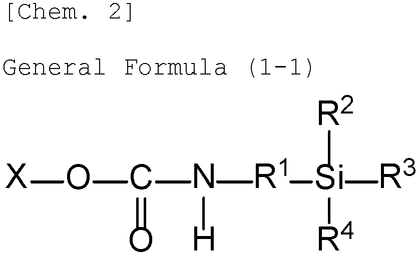

Each of X, R¹, R², R³, and R⁴ in General Formula (1-1) is as described above for General Formula (1).

In addition, an isocyanate group-containing compound can be used as a compound having an ultraviolet absorbing moiety, and a hydroxy group-containing compound can be used as a compound having a silane coupling moiety. Examples of the organosilicon compound obtained by a urethanization reaction of these compounds can include a compound represented by the following General Formula (1-2).

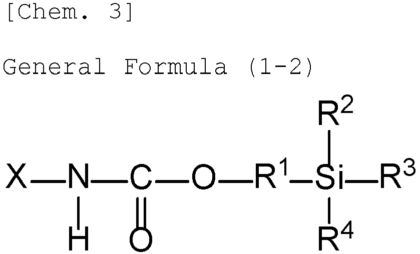

Each of X, R¹, R², R³, and R⁴ in General Formula (1-2) is as described above for General Formula (1).

The hydroxy group-containing compound has one or more hydroxy groups, preferably two or more hydroxy groups, and more preferably two to four hydroxy groups, per molecule. The isocyanate group-containing compound has one or more isocyanate groups, and preferably one or two isocyanate groups, per molecule. The number of isocyanate groups per molecule is more preferably one. The hydroxy group-containing compound and the isocyanate group-containing compound used to obtain the organosilicon compound can be obtained from commercially available products and can also be synthesized by a known method. When the hydroxy group-containing compound has two or more hydroxy groups per molecule, some hydroxy groups included in the compound may form a urethane bond with an isocyanate group and the remaining hydroxy groups may be included in the organosilicon compound that is a reaction product as hydroxy groups in an unreacted state, and all the hydroxy groups included in the compound may form a urethane bond with an isocyanate group. In addition, the compound having the structure in the former case and the compound having the structure in the latter case may be included in a reaction product after the urethanization reaction between the compound having an ultraviolet absorbing moiety and the compound having a silane coupling moiety. The same applies to a case where the isocyanate group-containing compound has two or more isocyanate groups per molecule.

Examples of the hydroxy group-containing compound having an ultraviolet absorbing moiety can include a benzotriazole-based compound represented by the following General Formula (A).

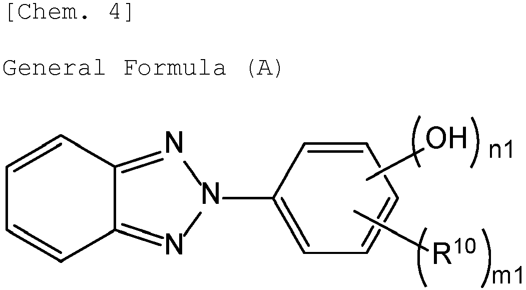

In General Formula (A), R¹⁰ represents a monovalent substituent, m1 is 0 or 1, and n1 is an integer of 1 to 3.

Examples of the monovalent substituent represented by R¹⁰ can include an aliphatic hydrocarbon group. The number of carbon atoms in the aliphatic hydrocarbon group can be, for example, one to three.

Examples of the aliphatic hydrocarbon group can include an alkyl group, and an alkyl group having 1 to 3 carbon atoms is preferable. Specific examples of the alkyl group can include a methyl group, an ethyl group, and a propyl group. Among them, a methyl group is preferable.

m1 is preferably 0.

n1 is preferably 2 or 3 and more preferably 2.

Examples of the hydroxy group-containing compound having an ultraviolet absorbing moiety can include a benzophenone-based compound represented by the following General Formula (B).

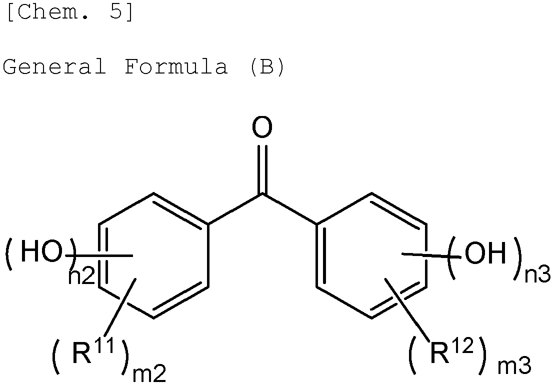

In General Formula (B), R¹¹ and R¹² can be each independently a monovalent substituent, m2 and m3 are each independently 0 or 1, and n2 and n3 are each independently an integer of 0 to 3, where n2 + n3 is an integer of 1 or more.

Examples of the monovalent substituent represented by R¹¹ or R¹² can include an aliphatic hydrocarbon group. The number of carbon atoms in the aliphatic hydrocarbon group can be, for example, one to three.

Examples of the hydrocarbon group can include an alkyl group, and an alkyl group having 1 to 3 carbon atoms is preferable. Specific examples of the alkyl group can include a methyl group, an ethyl group, and a propyl group. Among them, a methyl group is preferable.

m2 and m3 are preferably 0.

n2 and n3 are preferably each independently 2 or 3 and more preferably 2.

In addition, examples of the isocyanate group-containing compound having a silane coupling moiety can include an organosilicon compound represented by the following General Formula (C).

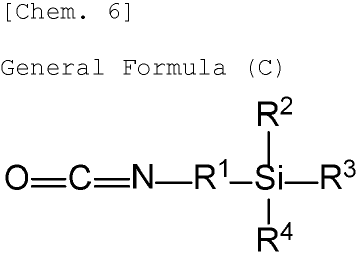

Each of R¹, R², R³, and R⁴ in General Formula (C) is as described above for General Formula (1).

In one aspect, the organosilicon compound in which the ultraviolet absorbing moiety and the silane coupling moiety are linked by the urethane bond can be a reaction product of the compound represented by General Formula (A) and the compound represented by General Formula (C). In addition, in one aspect, the organosilicon compound in which the ultraviolet absorbing moiety and the silane coupling moiety are linked by the urethane bond can be a reaction product of the compound represented by General Formula (B) and the compound represented by General Formula (C).

The urethanization reaction between the compound having an ultraviolet absorbing moiety and the compound having a silane coupling moiety can be performed, for example, in the presence of a catalyst. Examples of the catalyst for the urethanization reaction can include known catalysts, for example, organotin compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide, and tertiary amines (for example, tertiary alkylamines such as trimethylamine, triethylamine, tripropylamine, tributylamine, N,N-dimethylcyclohexylamine, and N.N-dicyclohexylmethylamine). In addition, as for the reaction conditions such as the reaction temperature, the reaction time, the presence or absence of the reaction solvent, and the type of the solvent in the case of using the solvent, a known technique related to the urethanization reaction can be applied.

From the viewpoint of improving the ultraviolet absorbability of the cured layer formed of the composition, the curable composition preferably contains the organosilicon compound, for example, in an amount of preferably 5.0 mass% or more, more preferably 6.0 mass% or more, still more preferably 7.0 mass% or more, further still more preferably 8.0 mass% or more, and even still more preferably 8.6 mass% or more, with respect to a total amount (100 mass%) of the effective components contained in the curable composition. In addition, a content of the organosilicon compound can be, for example, 30.0 mass% or less, 28.0 mass% or less, or 26.0 mass% or less, and is preferably less than 24.7 mass%, with respect to the total amount of the effective components contained in the curable composition. Here, the effective components refer to components other than the solvent.

### <Additional components>

The curable composition contains at least the organosilicon compound, and can contain one or more additional components. Examples of the additional component can include an organosilicon compound other than the organosilicon compound. Examples of such an organosilicon compound can include a compound represented by the following General Formula (2). Such an organosilicon compound may or may not contain one or both of an isocyanate group and a hydroxy group. 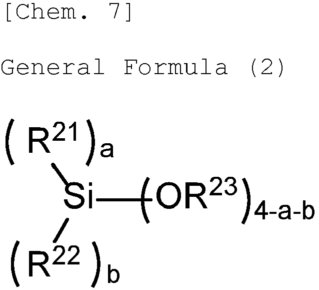 (In General Formula (2), R²¹ represents a substituted or unsubstituted monovalent hydrocarbon group having 1 to 20 carbon atoms, R²² and R²³ each independently represent an alkyl group, an aryl group, an aralkyl group, or an acyl group, a is an integer of 1 to 3, and b is an integer of 0 to 3, where (a + b) is an integer of 3 or less.)

In a case where R²¹ has a substituent, examples of the substituent can include various substituents, and as an example, an epoxy group-containing substituent can be exemplified. Examples of the epoxy group-containing substituent can include an epoxy group and a glycidyloxy group.

The number of carbon atoms of R²¹ is preferably two or more and more preferably three or more, but is preferably 15 or less, more preferably 12 or less, and still more preferably 10 or less. Note that in a case where R²¹ has a substituent, the number of carbon atoms of R²¹ refers to a total carbon number of an R²¹ part having the number of carbon atoms of the substituent.

The alkyl group represented by R²² or R²³ is preferably a linear, branched, or cyclic alkyl group having 1 to 8 carbon atoms. Specific examples thereof can include a methyl group, an ethyl group, an n-propyl group, an isopropyl group, an n-butyl group, an isobutyl group, a sec-butyl group, a tert-butyl group, a pentyl group, a hexyl group, a cyclopentyl group, and a cyclohexyl group.

The aryl group represented by R²² or R²³ is preferably an aryl group having 6 to 10 carbon atoms. Specific examples thereof can include a phenyl group and a tolyl group.

The aralkyl group represented by R²² or R²³ is preferably an aralkyl group having 7 to 10 carbon atoms. Specific examples thereof can include a benzyl group and a phenethyl group.

The acyl group represented by R²² or R²³ is preferably an acyl group having 2 to 10 carbon atoms. Specific examples thereof can include an acetyl group.

Among them, R²² and R²³ are preferably each independently a methyl group or an ethyl group.

In General Formula (2), a is an integer of 1 to 3, and is preferably 1 or 2 and more preferably 1.

b is an integer of 0 to 3, and is preferably 0 or 1 and more preferably 0.

In General Formula (2), in a case where a plurality of R²¹'s are present, the plurality of R²¹'s may be the same as or different from each other. The same applies to R²² and R23.

Examples of the compound represented by General Formula (2) can include 3-glycidoxypropylmethyldimethoxysilane, 3-glycidoxypropylmethyldiethoxysilane, 3-glycidoxypropyltrimethoxysilane, 3-glycidoxypropyltriethoxysilane, 3-isocyanatepropyltriethoxysilane, 3-aminopropyltriethoxysilane, 2-(3,4-epoxycyclohexyl)ethyltrimethoxysilane, and 3-ethyl-3-{[3-(triethoxysilyl)propoxy]methyl}oxetane. Among them, 3-glycidoxypropyltrimethoxysilane, 3-isocyanatepropyltriethoxysilane, and 3-aminopropyltriethoxysilane are preferable, and 3-glycidoxypropyltrimethoxysilane is more preferable.

In a case where the curable composition contains an organosilicon compound other than the organosilicon compound in which an ultraviolet absorbing moiety and a silane coupling moiety are linked by a urethane bond, a content thereof is not particularly limited, and can be in an arbitrary range.

In addition, the curable composition may or may not contain a bi- or higher polyfunctional epoxy compound. The polyfunctional epoxy compound is preferably not an organosilicon compound.

Examples of the polyfunctional epoxy compound include sorbitol polyglycidyl ether, pentaerythritol polyglycidyl ether, trimethylolpropane polyglycidyl ether, resorcinol diglycidyl ether, neopentyl glycol diglycidyl ether, 1,6-hexanediol diglycidyl ether, hydrogenated bisphenol A diglycidyl ether, ethylene-polyethylene glycol diglycidyl ether, propylene-polypropylene glycol diglycidyl ether, allyl glycidyl ether, 2-ethylhexyl glycidyl ether, phenyl glycidyl ether, glycidyl ether of a phenol polyethylene oxide adduct, p-tert-butylphenyl glycidyl ether, glycidyl ether of a lauryl alcohol polyethylene oxide adduct, polybutadiene diglycidyl ether, and polyglycerol polyglycidyl ether. In a case where a polyfunctional epoxy compound that is not an organosilicon compound is contained in the curable composition, a content thereof is preferably 1 to 30 mass%, more preferably 3 to 20 mass%, and still more preferably 5 to 10 mass%, with respect to the total amount of the effective components of the curable composition.

The curable composition can contain one or more curing catalysts. As the curing catalyst, a known catalyst can be used, and examples thereof can include tris(acetylacetonato)aluminum(III). A content of the curing catalyst is preferably 0.1 to 20 mass%, more preferably 0.5 to 10 mass%, and still more preferably 1 to 5 mass%, with respect to the total amount of the effective components of the curable composition.

The curable composition may not contain a solvent, and may contain one or more solvents for improving coatability of the composition. The solvent is preferably one or more organic solvents selected from the group consisting of an ether-based solvent, an ester-based solvent, an acetal-based solvent, an alcohol-based solvent, and a non-polar solvent, and specific examples thereof include propylene glycol monomethyl ether, propylene glycol monomethyl ether acetate, diacetone alcohol, methanol, ethanol, isopropanol, methyl ethyl ketone, ethylene glycol mono-n-propyl ether, and tetrahydrofuran. In a case where the curable composition contains a solvent, a total amount of the effective components in the curable composition is preferably 1 to 70 mass%, more preferably 5 to 50 mass%, and still more preferably 10 to 40 mass%, with respect to the total amount (100 mass%) of all the components of the curable composition containing the solvent.

The curable composition can contain one or more fillers for adjusting a refractive index of the cured layer formed of the composition. Examples of the filler can include inorganic oxides, and specific examples thereof include silicon oxide, titanium oxide, aluminum oxide, zirconium oxide, iron oxide, antimony oxide, tin oxide, and tungsten oxide. A content of the inorganic oxide in the curable composition is preferably 10 to 80 mass%, more preferably 20 to 70 mass%, and still more preferably 30 to 60 mass%, with respect to the total amount of the effective components of the curable composition. When preparing the curable composition, an inorganic oxide may be added as an inorganic oxide sol such as inorganic oxide particles. In addition, the inorganic oxide particles may be subjected to a surface treatment by an organic treatment agent or the like. An average particle size of the inorganic oxide particles is preferably 1 to 100 nm, more preferably 5 to 50 nm, and still more preferably 8 to 30 nm. Here, the average particle size of the inorganic oxide particles is a value calculated from specific surface area data by a Brunauer-Emmett-Teller equation (BET) method.

The curable composition may or may not contain one or more additives in addition to the components. Examples of the additive can include one or more known additives such as a leveling agent, a fluorine compound, a dye, a pigment, a photochromic agent, an antistatic agent, an antioxidant, and a light stabilizer. The additives can be used in an arbitrary amount depending on the purpose of addition.

### <Method for preparing curable composition>

The curable composition can be prepared by a preparation method including: obtaining the organosilicon compound by a urethanization reaction between a hydroxy group-containing compound having an ultraviolet absorbing moiety and an isocyanate group-containing compound having a silane coupling moiety; and preparing the curable composition by mixing the obtained organosilicon compound with one or more additional components.

A process for obtaining an organosilicon compound in which an ultraviolet absorbing moiety and a silane coupling moiety are linked by a urethane bond is as described above. In one aspect, the curable composition can be prepared by adding various components for preparing a curable composition to a reactant (for example, a liquid reactant (reaction liquid)) obtained by the process in an arbitrary order or at the same time, and stirring and mixing the components. In addition, in another aspect, the curable composition can be prepared by subjecting a reactant to a purification process after the process for obtaining the organosilicon compound, performing a process of isolating or highly purifying the organosilicon compound, adding various components for preparing a curable composition to the organosilicon compound in an arbitrary order or at the same time, and stirring and mixing the components. The former aspect is preferable in terms of preparation because the number of processes is small.

The curable composition described above can be used as a coating composition for forming a coating layer (cured layer). Preferably, the curable composition can be used as a coating composition for various optical products. Examples of the optical product can include various lenses such as a spectacle lens and a goggle lens, a visor portion of a sun visor, and a shield member of a helmet. A cured layer can be formed by applying the composition onto a substrate for an optical product and subjecting the applied composition to a curing treatment. The cured layer thus formed can contribute to improvement of durability of the optical product as a hard coating layer. In addition, the cured layer can exhibit excellent ultraviolet absorbability. More preferably, the curable composition can be a coating composition for a spectacle lens.

### [Spectacle lens and method for producing the same]

One aspect of the present invention relates to a spectacle lens including a cured layer obtained by curing the curable composition. The spectacle lens can be produced by a production method including coating a lens substrate with the curable composition to form a coating layer and subjecting the coating layer to a curing treatment to form a cured layer. In this way, a spectacle lens including a lens substrate and the cured layer can be obtained.

A thickness of the cured layer can be, for example, the same as a thickness of a hard coating layer usually provided in a spectacle lens, and is, for example, preferably 0.5 to 50 µm, more preferably 5 to 20 µm, and still more preferably 1 to 5 µm.

The lens substrate included in the spectacle lens can be a plastic lens substrate or a glass lens substrate. Examples of the glass lens substrate can include an inorganic glass lens substrate. As the lens substrate, a plastic lens substrate is preferable from the viewpoint of being lightweight, hard to break, and easy to handle. Examples of the plastic lens substrate can include a styrene resin including a (meth)acrylic resin, a polycarbonate resin, an allyl resin, an allyl carbonate resin such as diethyleneglycol bis(allylcarbonate) resin (CR-39), a vinyl resin, a polyester resin, a polyether resin, a urethane resin obtained by a reaction between an isocyanate compound and a hydroxy compound such as diethylene glycol, a thiourethane resin obtained by a reaction between an isocyanate compound and a polythiol compound, and a cured product obtained by curing a curable composition containing a (thio)epoxy compound having one or more disulfide bonds in a molecule. The lens substrate may be undyed (a colorless lens) or dyed (a dyed lens). A refractive index of the lens substrate can be, for example, about 1.50 to 1.75. However, the refractive index of the lens substrate is not limited thereto but may be within the above range or deviate from the above range. In the present invention and the present specification, the refractive index refers to a refractive index ne. In addition, the lens substrate may be a lens having a power (so-called prescription lens) or a lens having no power (so-called non-prescription lens). A thickness and diameter of the lens substrate are not particularly limited. For example, the thickness of the lens substrate can be about 0.5 to 30 mm, and the diameter of the lens substrate can be about 50 to 100 mm.

The spectacle lens can be various lenses such as a monofocal lens, a multifocal lens, and a progressive addition lens. The type of the lens is determined depending on the shapes of both surfaces of the lens substrate. In addition, the surface of the lens substrate may be a convex surface, a concave surface, or a flat surface. In a common lens substrate and spectacle lens, an object-side surface is a convex surface, and an eyeball-side surface is a concave surface. However, the present invention is not limited thereto. The cured layer can be provided one or both of the object-side surface and the eyeball-side surface of the lens substrate. Before the coating with the curable composition, the surface of the lens substrate can be subjected to one or more pretreatments such as a chemical treatment with an acid, an alkali, or an organic solvent, a plasma treatment, an ultraviolet irradiation treatment, and a cleaning treatment with a cleaning liquid. In addition, one or more other layers may or may not be included between the lens substrate and the cured layer. Examples of the other layers can include one or more various functional layers described below.

The coating with the curable composition can be performed by a known coating method such as a spin coating method or a dip coating method. The curing treatment can be heating and/or light irradiation. The curing treatment conditions may be determined according to the types of various components contained in the composition and the composition of the composition. For example, in the curing treatment (thermal curing) by heating, a heating temperature is preferably 60 to 180°C, more preferably 70 to 150°C, and still more preferably 80 to 130°C. The heating temperature is an ambient temperature at which heating is performed. During thermal curing, the heating temperature may or may not be changed. A heating time is preferably 30 minutes to 5 hours, more preferably 40 minutes to 4 hours, and still more preferably 45 minutes to 3 hours.

The spectacle lens may or may not include one or more functional layers in addition to the cured layer. Examples of the functional layer can include layers known as functional layers of a spectacle lens, such as an antireflection layer, a photochromic layer, a polarizing layer, a primer layer, a water-repellent or hydrophilic antifouling layer, and an antifogging layer.

### [Spectacles]

One aspect of the present invention relates to spectacles including the spectacle lenses. Details of the spectacle lenses included in the spectacles are as described above. A known technique related to the spectacles can be applied to a configuration such as a frame.

### Examples

Hereinafter, the present invention will be further described with reference to Examples. However, the present invention is not limited to aspects described in Examples. The room temperature described below is in a range of 20 to 25°C. Unless otherwise specified, various operations and evaluations described below were performed in the air at room temperature. In addition, the temperature described below is a liquid temperature of a reaction liquid, unless otherwise specified.

### [Example 1]

### (1) Preparation of curable composition

To a container (hereinafter, described as a "container 1"), 2-(2,4-dihydroxyphenyl)-2H-benzotriazole (ultraviolet absorber), dibutyltin diacetate (catalyst), and (3-isocyanatopropyl)triethoxysilane (isocyanate group-containing silane coupling agent) were added, and the mixture was stirred at 80°C for 3 hours.

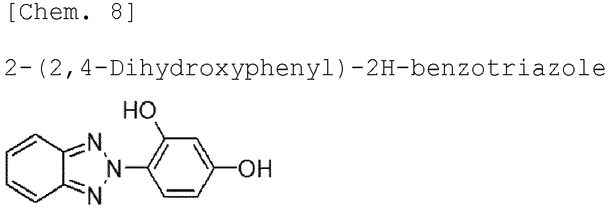

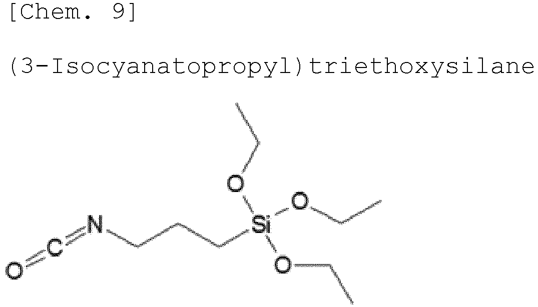

In a Fourier Transform Infrared Spectroscopy (FT-IR) spectrum obtained by collecting a part of the reactant obtained above and performing FT-IR analysis, a peak of isocyanate near the wavenumber of 2,160 to 2,330 cm⁻¹ confirmed in the FT-IR spectrum obtained by performing FT-IR analysis on the isocyanate group-containing silane coupling agent was not observed, whereas a peak of urethane near the wavenumber of 1,670 to 1,750 cm⁻¹ was confirmed. It was confirmed from the results that the urethanization reaction between the hydroxy group contained in the ultraviolet absorber and the isocyanate group contained in the silane coupling agent proceeded, and the total amount of the isocyanate groups was subjected to the urethanization reaction to form a urethane bond.

To the container 1 containing the reactant, 3-glycidoxypropyltrimethoxysilane was added while the reactant in the container was stirred at room temperature, and thereafter, methanol (solvent) was added.

To a container different from the container (hereinafter, described as a "container 2"), silica sol, propylene glycol monomethyl ether, water, and tris(acetylacetonato)aluminum(III) were sequentially added in this order, and then, the mixture was stirred at room temperature for 3 hours. The reaction liquid in the container 1 was added to the container 2 while the mixture was continuously stirred. Thereafter, a leveling agent was added to the container 2 while the mixture was continuously stirred, the mixture was stirred at about 5°C for 144 hours, and then, the mixture was stirred at room temperature for 48 hours.

Then, a curable composition containing an organosilicon compound in which an ultraviolet absorbing moiety and a silane coupling moiety were linked by a urethane bond was prepared. The amounts of various components used (unit: mass%) in the preparation of the curable composition are shown in Table 1.

### (2) Production of spectacle lens

A lens substrate for spectacles (S-4.00D, refractive index: 1.67, diameter: 75 mm, thickness: 1.0 mm, polythiourethane resin) was immersed in an aqueous sodium hydroxide solution having a concentration of 10 mass% (liquid temperature: 45°C) for 10 minutes, and the solution was washed with pure water and then dried.

Thereafter, a coating layer obtained by coating the convex surface (object-side surface) and the concave surface (eyeball-side surface) of the lens substrate with the curable composition by a dip coating method was formed, the coating layer was heated in a heat treatment furnace at an in-furnace atmosphere temperature of 80°C for 20 minutes, and then, the coating layer was further heated for 2 hours by raising the in-furnace atmosphere temperature to 110°C, thereby thermally curing the coating layer.

In this way, a spectacle lens including a cured layer having a thickness of 3.1 µm and formed on each of an object-side and an eyeball-side thereof was produced.

### [Examples 2 to 5]

A curable composition was prepared in the same manner as that of Example 1, except that the amounts of various components used in the preparation of the curable composition were changed as shown in Table 1. Also in Examples 2 to 5, FT-IR analysis was performed in the same manner as that of Example 1 to confirm disappearance of the peak of isocyanate and the presence of the peak of urethane.

A spectacle lens including a cured layer formed on both surfaces thereof was produced in the same manner as that of Example 1 using the prepared curable composition.

### [Comparative Examples 1 to 3]

A curable composition was prepared in the same manner as that of Example 1, except that (3-isocyanatopropyl)triethoxysilane (isocyanate group-containing silane coupling agent) was not used and the amounts of components used in the preparation of the curable composition were changed as shown in Table 1.

A spectacle lens including a cured layer formed on both surfaces thereof was produced in the same manner as that of Example 1 using the prepared curable composition.

### [Example 6]

A curable composition was prepared in the same manner as that of Example 1, except that 2,2',4,4'-tetrahydroxybenzophenone was used as an ultraviolet absorber and various compounds were used in amounts shown in Table 2 in the preparation of the curable composition. Also in Example 6, FT-IR analysis was performed in the same manner as that of Example 1 to confirm disappearance of the peak of isocyanate and the presence of the peak of urethane.

A spectacle lens including a cured layer formed on both surfaces thereof was produced in the same manner as that of Example 1 using the prepared curable composition.

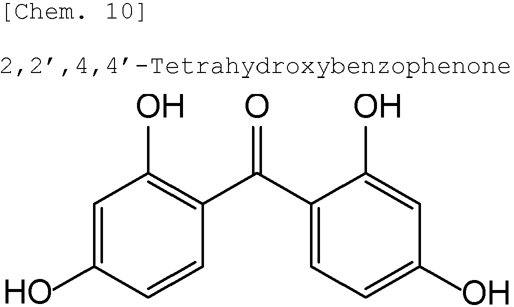

### [Comparative Example 4]

A curable composition was prepared in the same manner as that of Example 1, except that (3-isocyanatopropyl)triethoxysilane (isocyanate group-containing silane coupling agent) was not used, 2,2',4,4'-tetrahydroxybenzophenone was used as an ultraviolet absorber, and the amounts of components used in the preparation of the curable composition were changed as shown in Table 2.

A spectacle lens including a cured layer formed on both surfaces thereof was produced in the same manner as that of Example 1 using the prepared curable composition.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Inorganic oxide | Silica sol | 40.86 | 40.59 | 40. 32 | 39. 58 | 37. 93 | 40. 92 | 40.79 | 40.66 |
| Organosilicon compound | Si-1 | 15.68 | 15. 57 | 15. 47 | 15. 19 | 14.56 | 15.70 | 15.65 | 15.60 |
| | Si-2 | 0.16 | 0. 49 | 0. 84 | 1. 77 | 3. 81 | - | - | - |
| Catalyst | Al (acac)₃ | 0.57 | 0.57 | 0.56 | 0.55 | 0.53 | 0.57 | 0.57 | 0.57 |
| Catalyst | Sn cat. | 0.01 | 0.02 | 0.03 | 0.07 | 0.15 | - | - | - |
| Ultraviolet absorber | UV-1 | 0.15 | 0.45 | 0.77 | 1.62 | 3.50 | 0.16 | 0.48 | 0.79 |
| Solvent | PGM | 18.31 | 18.20 | 18.07 | 17.74 | 17.00 | 18.34 | 18.29 | 18.23 |
| | MeOH | 18.86 | 18.73 | 18.61 | 18.25 | 17.50 | 18.89 | 18.83 | 18.77 |
| | Water | 5.41 | 5.37 | 5.33 | 5.22 | 5.01 | 5.41 | 5.40 | 5.38 |
| Total | | 100.00 | 100.00 | 100.00 | 100.00 | 100.00 | 100.00 | 100.00 | 100.00 |

**[Table 2]**

| | | Example 6 | Comparative Example 4 |
|---|---|---|---|
| Inorganic oxide | Silica sol | 40.57 | 40.78 |
| Organosilicon compound | Si-1 | 15.57 | 15.65 |
| | Si-2 | 0.50 | - |
| Catalyst | Al(acac)₃ | 0.57 | 0.57 |
| Catalyst | Sn cat. | 0.02 | - |
| Ultraviolet absorber | UV-2 | 0.50 | 0.51 |
| Solvent | PGM | 18.19 | 18.28 |
| | MeOH | 18.72 | 18.82 |
| | Water | 5.37 | 5.40 |
| Total | | 100.00 | 100.00 |

The various components in the above table are as follows.
Silica sol: concentration of silicon oxide: 30 mass%,
dispersion medium: propylene glycol monomethyl ether
Si-1: 3-glycidoxypropyltrimethoxysilane
Si-2: (3-isocyanatopropyl)triethoxysilane
Al(acac)₃: tris(acetylacetonato)aluminum(III)
Sn cat.: dibutyltin diacetate
UV-1: 2-(2,4-dihydroxyphenyl)-2H-benzotriazole
UV-2: 2,2',4,4'-tetrahydroxybenzophenone
PGM: propylene glycol monomethyl ether
MeOH: methanol

### [Evaluation method]

<Evaluation of weather resistance>

Ultraviolet rays were intermittently emitted toward the object-side surface of each of the spectacle lenses of Examples and Comparative Examples under the condition of 0.77 W/m² in a QUV ultraviolet fluorescent tube type accelerated weathering tester (manufactured by Q-Lab Corporation) under a high-temperature and high-humidity environment of a temperature of 45°C and a relative humidity of 90%. At the time when the number of days shown in Table 3 (Tables 3-1 and 3-2) has elapsed, the spectacle lens was taken out from the tester, the object-side surface of the cured layer was visually observed, and a crack generation was evaluated based on the following criteria. After visual observation, the spectacle lens was placed in the tester again, and ultraviolet ray irradiation was continued.

### (Evaluation criteria)

5: No crack
4: Slight cracks on outer periphery of surface of cured layer
3: Cracks more severe than in 4 on outer periphery of surface of cured layer
2: Cracks on outer periphery of surface of cured layer, and cracks partially in central portion
1: Slight cracks on entire surface of cured layer
0: Cracks more severe than in 1 on entire surface of cured layer

**[Table 3-1]**

| Number of elapsed days (days) | Comparative Example 1 | Example 1 | Example 2 | Example 3 | Example 4 | Example 5 |
|---|---|---|---|---|---|---|
| 0 | 5 | 5 | 5 | 5 | 5 | 5 |
| 9 | 0 | 5 | 5 | 5 | - | - |
| 10 | - | - | - | - | 5 | 5 |
| 14 | 0 | 4 | 4 | 5 | 5 | 5 |
| 18 | 0 | 0 | 3 | 3 | 5 | 5 |
| 21 | 0 | 0 | 3 | 3 | 4 | 4 |
| 24 | 0 | 0 | 3 | 3 | 4 | 4 |
| 28 | 0 | 0 | 1 | 2 | 2 | 3 |

**[Table 3-2]**

| Number of elapsed days (days) | Comparative Example 6 | Example 6 |
|---|---|---|
| 0 | 5 | 5 |
| 9 | 4 | 5 |
| 14 | 1 | 5 |
| 24 | 0 | 1 |

From the results shown in Table 3, it can be confirmed that in each of the spectacle lenses of Examples, the generation of the cracks is suppressed (that is, the weather resistance is excellent) compared to each of the spectacle lenses of Comparative Examples. As a result of visually observing the object-side surface of the cured layer of each of the spectacle lenses of Comparative Examples during the weather resistance evaluation, a precipitate was confirmed. It is presumed that the precipitate was a precipitate of the ultraviolet absorber. On the other hand, such a precipitate was not observed in each of the spectacle lenses of Examples after the weather resistance evaluation.

### <Evaluation 1 of adhesion>

A first silicon oxide layer was formed on the object-side surface of each of the spectacle lenses of Examples 2 to 4 and Comparative Example 1 by a vacuum vapor deposition method, and a zirconium oxide layer and a silicon oxide layer as second to seventh layers were alternately layered to form an antireflection layer (multilayer antireflection film).

Thereafter, 10 × 10 squares (100 squares in total) were formed on the object-side surface of each spectacle lens based on JIS K5600-5-6 (ISO 2409:1992), a peeling test was performed twice using a cellophane adhesive tape, in the entire squares, the square in which peeling was not observed was evaluated as "not peeled", the square that was entirely or partially peeled was evaluated as "peeled", and the number of squares having no peeling was counted. The evaluation results are shown in Table 4.

In the squares in which peeling was generated in the peeling test, peeling was generated between the lens substrate and the cured layer. The peeling was generated because a primer layer was not formed between the lens substrate and the cured layer in the process of producing the spectacle lens for Evaluation 1 of adhesion, unlike a method for producing a spectacle lens for Evaluation 2 of adhesion described below. Therefore, it can be determined that the adhesion between the lens substrate and the cured layer is higher as the number of squares having no peeling is larger.

**[Table 4]**

| | Comparative Example 1 | Example 2 | Example 3 | Example 4 |
|---|---|---|---|---|
| Evaluation results (number of squares having no peeling/number of all squares) | 45/100 | 100/100 | 100/100 | 100/100 |

### <Evaluation 2 of adhesion>

A spectacle lens was produced in the same manner as that of the method for producing each of the spectacle lenses of Examples 1 to 5 and Comparative Example 1, except that a primer liquid was applied on the lens substrate before the curable composition was applied by a dip coating method, and the lens substrate was subjected to a heat treatment in a heating furnace at an in-furnace temperature of 80°C for 20 minutes to form a primer layer on both surfaces of the lens substrate. An antireflection layer was formed on the object-side surface of each spectacle lens thus produced in the same manner as that of the method for producing a spectacle lens for Evaluation 1 of adhesion.

Thereafter, 10 × 10 squares (100 squares in total) were formed on the object-side surface of each spectacle lens based on JIS K5600-5-6 (ISO 2409:1992), a peeling test was performed twice using a cellophane adhesive tape, and then, adhesion was evaluated based on the following evaluation criteria. In the squares in which peeling was generated in the peeling test, peeling was generated between the cured layer and the antireflection layer. The evaluation results are shown in Table 5.
A: No peeling was observed in the squares.
B: There were squares in which peeling was very slightly and partially observed (slight peeling than in C).
C: There were squares in which peeling was slightly and partially observed (slight peeling than in D).
D: There were squares in which peeling was partially observed.
E: All squares were peeled off.

**[Table 5]**

| | Comparative Example 1 | Example 1 | Example 2 | Example 3 | Example 4 | Example 5 |
|---|---|---|---|---|---|---|
| Evaluation results | D | B | B | A | B | B |

From the results shown in Tables 4 and 5, it can be confirmed that in each of the spectacle lenses of Examples, the cured layer has excellent adhesion to the portion adjacent thereto (the lens substrate or the antireflection layer) compared to each of the spectacle lenses of Comparative Examples. In this regard, the present inventors presume that the organosilicon compound contained in the cured layer of each of the spectacle lenses of Examples has the urethane bond, which contributes to the improvement of adhesion. However, this presumption does not limit the present invention.

### <Evaluation of ultraviolet absorbability>

For each of the spectacle lenses of Examples and Comparative Examples shown in Table 6, a transmittance was measured in a wavelength region of 280 nm to 780 nm using a spectrophotometer (U-4100, manufactured by Hitachi High-Technologies Corporation).

From the measurement results, an average transmittance in the wavelength region of 300 nm to 380 nm was calculated.

**[Table 6]**

| | Average transmittance (300 nm to 380 nm) |
|---|---|
| Comparative Example 1 | 81.6% |
| Example 1 | 69.0% |
| Comparative Example 2 | 52.3% |
| Example 2 | 47.3% |
| Comparative Example 3 | 45.5% |
| Example 3 | 34.9% |

It can be regarded that the spectacle lens having a lower value of the average transmittance in the wavelength region of 300 nm to 380 nm obtained by the above method has more excellent ultraviolet absorbability.

In Table 6, when comparing Examples and Comparative Examples in which the amounts of ultraviolet absorbers used in the preparation of the curable composition are the same as each other, the value of the average transmittance in each of Examples in which the ultraviolet absorbing moiety of the ultraviolet absorber is linked to the silane coupling agent by the urethane bond is lower than the value in each of Comparative Examples to be compared.

It was confirmed from the above results that the cured layer containing the organosilicon compound in which the ultraviolet absorbing moiety and the silane coupling moiety were linked by the urethane bond imparted excellent ultraviolet absorbability to the spectacle lens.

Finally, the aspects described above will be summarized.

According to one aspect, there is provided a curable composition containing an organosilicon compound in which an ultraviolet absorbing moiety and a silane coupling moiety are linked by a urethane bond.

The cured layer formed using the curable composition contains an organosilicon compound in which an ultraviolet absorbing moiety and a silane coupling moiety are linked by a urethane bond, and thus, can exhibit excellent weather resistance. Such a cured layer provided can contribute to suppression of deterioration of various optical products such as a spectacle lens. In one aspect, the cured layer can be a cured layer having excellent adhesion to a portion adjacent to the layer such as a lens substrate. In addition, in one aspect, the spectacle lens including the cured layer can exhibit excellent ultraviolet absorbability.

In one aspect, the ultraviolet absorbing moiety can be a benzotriazole skeleton-containing moiety.

In one aspect, the ultraviolet absorbing moiety can be a benzophenone skeleton-containing moiety.

In one aspect, the organosilicon compound can be a compound represented by General Formula (1) shown above.

In one aspect, the curable composition can be a coating composition.

In one aspect, the curable composition can be a coating composition for a spectacle lens.

According to one aspect, there is provided a spectacle lens including a cured layer obtained by curing the curable composition.

According to one aspect, spectacles including the spectacle lenses are provided.

According to one aspect, there is provided a method for preparing the curable composition, the method including:
obtaining the organosilicon compound by a urethanization reaction between a hydroxy group-containing compound having an ultraviolet absorbing moiety and an isocyanate group-containing compound having a silane coupling moiety; and
preparing the curable composition by mixing the obtained organosilicon compound with one or more additional components.

In one aspect, the additional component can include an organosilicon compound different from the organosilicon compound.

According to one aspect, there is provided a method for producing a spectacle lens, the method including: coating a lens substrate with the curable composition to form a coating layer and subjecting the coating layer to a curing treatment to form a cured layer.

The embodiment disclosed here is exemplary in all respects, and it should be considered that the embodiment is not restrictive. The scope of the present invention is defined not by the above description but by claims, and intends to include all modifications within meaning and a scope equal to claims.

### Industrial Applicability

One aspect of the present invention is useful in the field of producing various optical products such as a spectacle lens.

## Claims

1. A curable composition comprising an organosilicon compound in which an ultraviolet absorbing moiety and a silane coupling moiety are linked by a urethane bond.

2. The curable composition according to claim 1, wherein the ultraviolet absorbing moiety is a benzotriazole skeleton-containing moiety.

3. The curable composition according to claim 1, wherein the ultraviolet absorbing moiety is a benzophenone skeleton-containing moiety.

4. The curable composition according to any one of claims 1 to 3, wherein the organosilicon compound is a compound represented by the following General Formula (1), 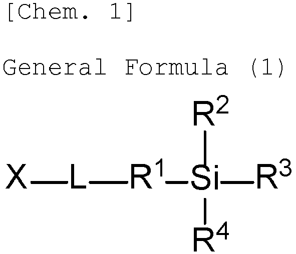 wherein X represents an ultraviolet absorbing moiety, L represents a urethane bond, R¹ represents a divalent linking group, and R², R³, and R⁴ each independently represent an alkoxy group or an alkyl group, where one or more of R², R³, and R⁴ represent an alkoxy group.

5. The curable composition according to any one of claims 1 to 4, wherein the curable composition is a coating composition.

6. The curable composition according to any one of claims 1 to 5, wherein the curable composition is a coating composition for a spectacle lens.

7. A spectacle lens comprising a cured layer obtained by curing the curable composition according to any one of claims 1 to 6.

8. Spectacles comprising the spectacle lenses according to claim 7.

9. A method for preparing the curable composition according to any one of claims 1 to 6, the method comprising:
obtaining the organosilicon compound by a urethanization reaction between a hydroxy group-containing compound having an ultraviolet absorbing moiety and an isocyanate group-containing compound having a silane coupling moiety; and
preparing the curable composition by mixing the obtained organosilicon compound with one or more additional components.

10. The method for preparing the curable composition according to claim 9, wherein the additional component includes an organosilicon compound different from the organosilicon compound.

11. A method for producing a spectacle lens, the method comprising:
coating a lens substrate with the curable composition according to any one of claims 1 to 6 to form a coating layer; and
subjecting the coating layer to a curing treatment to form a cured layer.
